# EUROPEAN PATENT APPLICATION

(11) **EP 4 671 993 A1**
(43) Date of publication of application: **31.12.2025**
(21) Application number: 24838353.1
(22) Date of filing: 21.03.2024
(51) Int. Cl.: G06F 11/07, G06F 3/0488

(54) **ANOMALY EVENT PROCESSING METHOD, ELECTRONIC DEVICE, AND STORAGE MEDIUM**

(30) Priority: 10.07.2023 CN 202310843612
(71) Applicant: Honor Device Co., Ltd., Shenzhen, Guangdong 518040 (CN)
(72) Inventor: WANG, Zhen, Shenzhen, Guangdong 518040 (CN); JIA, Xuemei, Shenzhen, Guangdong 518040 (CN)
(74) Representative: Gill Jennings & Every LLP
(86) International application number: PCT/CN2024/083086
(87) International publication number: WO 2025/011093

(57) **Abstract**

This application provides an exception event handling method, an electronic device, and a storage medium, and relates to the field of communication technologies. The electronic device detects a first interrupt request from a touch panel integrated circuit, and determines, in response to the first interrupt request, whether an interrupt exception event occurs in the touch panel integrated circuit. If the interrupt exception event occurs in the touch panel integrated circuit, the electronic device sends first notification information to a system process at an upper layer, and shields an interrupt request from the touch panel integrated circuit. The first notification information is used to notify the system process not to instruct to enable an interrupt response. In this manner, while an interrupt exception event occurs in the touch panel integrated circuit, the electronic device does not enable an interrupt response to an interrupt request again, thereby reducing impact of the interrupt exception event.

## Description

This application claims priority to Chinese Patent Application No. 202310843612.6, filed with the China National Intellectual Property Administration on July 10, 2023 and entitled "EXCEPTION EVENT HANDLING METHOD, ELECTRONIC DEVICE, AND STORAGE MEDIUM", which is incorporated herein by reference in its entirety.

### TECHNICAL FIELD

Embodiments of this application relate to the field of communication technologies, and in particular, to an exception event handling method, an electronic device, and a storage medium.

### BACKGROUND

For convenience of user operation, an electronic device is usually provided with a touch function. For example, the electronic device is a mobile phone, and the mobile phone is usually equipped with a touchscreen. The mobile phone implements a corresponding function or service (for example, power-on or power-off) by identifying a gesture, a fingerprint, and the like of a user on the touchscreen.

The touch function of the electronic device may be implemented by using a touch panel integrated circuit (touch panel integrated circuit, TPIC). The touch panel integrated circuit may detect a user operation of the user on a touch panel, and notify the electronic device of the user operation in a manner of an interrupt request. In this manner, the electronic device may provide the user with a corresponding function or service in response to the user operation.

However, in some cases, an exception occurs in the touch panel integrated circuit of the electronic device, and the electronic device receives a large quantity of invalid interrupts. In such cases, the electronic device may experience abnormal occupation of resources, and even a crash, which severely affects user experience.

### SUMMARY

Embodiments of this application provide an exception event handling method, an electronic device, and a storage medium for reducing impact of an invalid interrupt on the electronic device when an exception occurs in a touch panel integrated circuit of the electronic device, and improving user experience.

To achieve the foregoing objectives, the following technical solutions are used in embodiments of this application:

According to a first aspect, an exception event handling method is provided. The method includes: an electronic device detects a first interrupt request from a touch panel integrated circuit. The electronic device may determine, in response to the first interrupt request, whether an interrupt exception event occurs in the touch panel integrated circuit. The interrupt exception event indicates that a frequency of interrupt requests from the touch panel integrated circuit is greater than a preset frequency threshold. If the interrupt exception event occurs in the touch panel integrated circuit, the electronic device shields an interrupt request from the touch panel integrated circuit, and notifies a system process at a user layer through the first notification information, so that the system process no longer instructs to enable an interrupt response for use in response to an interrupt message from the touch panel integrated circuit.

In this manner, if the electronic device receives a large quantity of interrupt requests from the touch panel integrated circuit over a period of time, for example, if an average time interval for the electronic device to receive a preset quantity of interrupt requests is less than preset duration, the electronic device may shield the interrupt requests from the touch panel integrated circuit, and disable interrupt responses to the interrupt requests. As such, impact of the interrupt exception event of the touch panel integrated circuit on the electronic device may be reduced, and crashes of the electronic device may be reduced. In addition, while the interrupt exception event occurs in the touch panel integrated circuit, the electronic device does not enable an interrupt response to an interrupt request again, so that impact of the interrupt exception event may be minimized.

In one possible implementation of the first aspect, when a working state of the touch panel integrated circuit is a screen-on state or a gesture screen-off state, the electronic device determines whether an interrupt exception event occurs in the touch panel integrated circuit. The gesture screen-off state is a state in which the electronic device is in a screen-off state but responds to a touch gesture operation.

In this implementation, in the screen-on state and the gesture screen-off state, the electronic device enables detection of an interrupt exception event, so as to reduce impact of the interrupt exception event of the touch panel integrated circuit on a user to operate the mobile phone.

In another possible implementation of the first aspect, if the working state of the touch panel integrated circuit is a screen-on state, the electronic device determines whether an interrupt exception event occurs in the touch panel integrated circuit when the first interrupt request is an invalid interrupt.

In this implementation, in the screen-on state, a user operates a mobile phone at a relatively high frequency, and the electronic device may determine whether a currently received first interrupt message is an invalid interrupt. If the first interrupt message is an invalid interrupt, the electronic device then detects whether an interrupt exception event occurs in the touch panel integrated circuit. As such, misjudgment of an interrupt exception event in the screen-on state may be reduced.

In another possible implementation of the first aspect, the electronic device disables the touch panel integrated circuit if the interrupt exception event occurs in the touch panel integrated circuit.

In this implementation, the electronic device may further control the touch panel integrated circuit to be powered off to disable the touch panel integrated circuit. As such, the touch panel integrated circuit may better recover from an exception.

In another possible implementation of the first aspect, the working state of the touch panel integrated circuit is any one of a screen-on state, a gesture screen-off state, a power-off state, and an interrupt protection state. The power-off state is a state in which the electronic device is in a screen-off state and does not respond to a touch gesture operation.

In another possible implementation of the first aspect, the working state of the touch panel integrated circuit is the interrupt protection state if the interrupt exception event occurs in the touch panel integrated circuit.

In this implementation, the interrupt protection state may be a temporary abnormal working state added to the electronic device when the interrupt exception event occurs in the touch panel integrated circuit. When the electronic device detects that the interrupt exception event occurs in the touch panel integrated circuit, the electronic device may switch the working state to the interrupt protection state. In the interrupt protection state, the electronic device shields interrupt requests from the touch panel integrated circuit, and forces the touch panel integrated circuit to be powered off. The electronic device may respond, through the interrupt protection state, to the interrupt exception event that occurs in the touch panel integrated circuit.

In another possible implementation of the first aspect, the electronic device receives an exception recovery instruction =, which is used to instruct the touch panel integrated circuit to recover from the interrupt exception event. In response to the exception recovery instruction, the electronic device obtains a current working state of the touch panel integrated circuit, and controls the touch panel integrated circuit to recover to a previous working state of the interrupt protection state if the current working state of the touch panel integrated circuit is the interrupt protection state.

In this implementation, the touch panel integrated circuit of the electronic device recovers from the interrupt exception event. Because an interrupt exception state is a temporary abnormal working state, the electronic device may control a touch driver to switch the touch panel integrated circuit to a previous working state of the interrupt protection state.

In another possible implementation of the first aspect, the electronic device recovers the touch panel integrated circuit to the current working state of the touch panel integrated circuit after the touch panel integrated circuit is powered off if the current working state of the touch panel integrated circuit is not the interrupt protection state.

In this implementation, the electronic device controls the touch driver to switch the touch panel integrated circuit to the current working state after the touch panel integrated circuit is restarted if the current working state of the touch panel integrated circuit is not the interrupt protection state.

In another possible implementation of the first aspect, the electronic device may further send second notification information to the system process. The second notification information is used to notify the system process to instruct to enable an interrupt response.

In this implementation, after the touch panel integrated circuit is recovered, the electronic device may further notify the system process through the second notification information. The system process may instruct to enable an interrupt response, so that the electronic device properly responds to a touch operation of the user.

According to a second aspect, this application provides an electronic device. The electronic device includes: a touch panel integrated circuit, a memory, and one or more processors. The memory is coupled to the processor. The touch panel integrated circuit is configured to receive a touch signal. The memory stores computer program code, and the computer program code includes computer instructions. When the computer instructions are executed by the processor, the electronic device is enabled to perform the following steps: detecting a first interrupt request from the touch panel integrated circuit; determining, in response to the first interrupt request, whether an interrupt exception event occurs in the touch panel integrated circuit, where the interrupt exception event indicates that an exception occurs on an interrupt request from the touch panel integrated circuit; and if the interrupt exception event occurs in the touch panel integrated circuit, sending first notification information to a system process of the electronic device, and shielding the interrupt request from the touch panel integrated circuit, where the first notification information is used to notify the system process not to instruct to enable an interrupt response, and the interrupt response is used to respond to the interrupt request from the touch panel integrated circuit.

In one possible implementation of the second aspect, when the computer instructions are executed by the processor, the electronic device is enabled to further perform the following step: determining whether an interrupt exception event occurs in the touch panel integrated circuit when a working state of the touch panel integrated circuit is a screen-on state or a gesture screen-off state, where the gesture screen-off state is a state in which the electronic device is in a screen-off state but responds to a touch gesture operation.

In another possible implementation of the second aspect, when the computer instructions are executed by the processor, the electronic device is enabled to further perform the following step: determining whether the interrupt exception event occurs in the touch panel integrated circuit when the first interrupt request is an invalid interrupt if the working state of the touch panel integrated circuit is the screen-on state.

In another possible implementation of the second aspect, when the computer instructions are executed by the processor, the electronic device is enabled to further perform the following step: disabling the touch panel integrated circuit if the interrupt exception event occurs in the touch panel integrated circuit.

In another possible implementation of the second aspect, the working state of the touch panel integrated circuit is any one of a screen-on state, a gesture screen-off state, a power-off state, and an interrupt protection state, where the power-off state is a state in which the electronic device is in a screen-off state and does not respond to a touch gesture operation.

In another possible implementation of the second aspect, the working state of the touch panel integrated circuit is the interrupt protection state if the interrupt exception event occurs in the touch panel integrated circuit.

In another possible implementation of the second aspect, when the computer instructions are executed by the processor, the electronic device is enabled to further perform the following steps: receiving an exception recovery instruction, where the exception recovery instruction is used to instruct the touch panel integrated circuit to recover from the interrupt exception event; obtaining, in response to the exception recovery instruction, a current working state of the touch panel integrated circuit; and controlling the touch panel integrated circuit to recover to a previous working state of the interrupt protection state if the current working state of the touch panel integrated circuit is the interrupt protection state.

In another possible implementation of the second aspect, when the computer instructions are executed by the processor, the electronic device is enabled to further perform the following step: recovering the touch panel integrated circuit to the current working state of the touch panel integrated circuit after the touch panel integrated circuit is powered off if the current working state of the touch panel integrated circuit is not the interrupt protection state.

In another possible implementation of the second aspect, when the computer instructions are executed by the processor, the electronic device is enabled to further perform the following step: sending second notification information to the system process, where the second notification information is used to notify the system process to instruct to enable an interrupt response.

According to a third aspect, this application provides a computer-readable storage medium, including computer instructions. When the computer instructions are run on an electronic device, the electronic device is enabled to perform the method according to the first aspect and any one of the possible implementations thereof.

According to a fourth aspect, this application provides a computer program product including program instructions. When the computer program product runs on a computer, the computer is enabled to perform the method according to the first aspect and any one of the possible implementations thereof. For example, the computer may be the electronic device.

According to a fifth aspect, this application provides a chip system applied to the electronic device. The chip system includes an interface circuit and a processor. The interface circuit and the processor are interconnected through a line. The interface circuit is configured to receive a signal from the memory and send the signal to the processor. The signal includes computer instructions stored in the memory. When the processor executes the computer instructions, the electronic device performs the method according to the first aspect and any one of the possible implementations thereof.

### BRIEF DESCRIPTION OF DRAWINGS

FIG. 1 is a schematic diagram of a structure of one example of a display according to an embodiment of this application;
FIG. 2 is a schematic diagram of one example of switching between different working states according to an embodiment of this application;
FIG. 3 is a schematic diagram of another example of switching between different working states according to an embodiment of this application;
FIG. 4 is a block diagram of a hardware structure of an electronic device using a mobile phone 100 as an example according to an embodiment of this application;
FIG. 5 is a block diagram of a software structure of an electronic device using a mobile phone 100 as an example according to an embodiment of this application;
FIG. 6 is a flowchart of one example of an exception event handling method according to an embodiment of this application;
FIG. 7 is a flowchart of one example of detection of an interrupt exception event according to an embodiment of this application;
FIG. 8 is a flowchart of one example of a power-off procedure according to an embodiment of this application;
FIG. 9 is a flowchart of another example of detection of an interrupt exception event according to an embodiment of this application;
FIG. 10 is a flowchart of another example of an exception event handling method according to an embodiment of this application;
FIG. 11 is a flowchart of one example of controlling a touch panel integrated circuit to switch to a target state according to an embodiment of this application; and
FIG. 12 is a flowchart of one example of an exception event handling method in a screen-on state according to an embodiment of this application.

### DESCRIPTION OF EMBODIMENTS

To provide a user with better user experience, a display of an electronic device is usually provided with a touch function. The electronic device may, in response to a touch operation such as tap or swipe of a user on a display, implement a corresponding function or service.

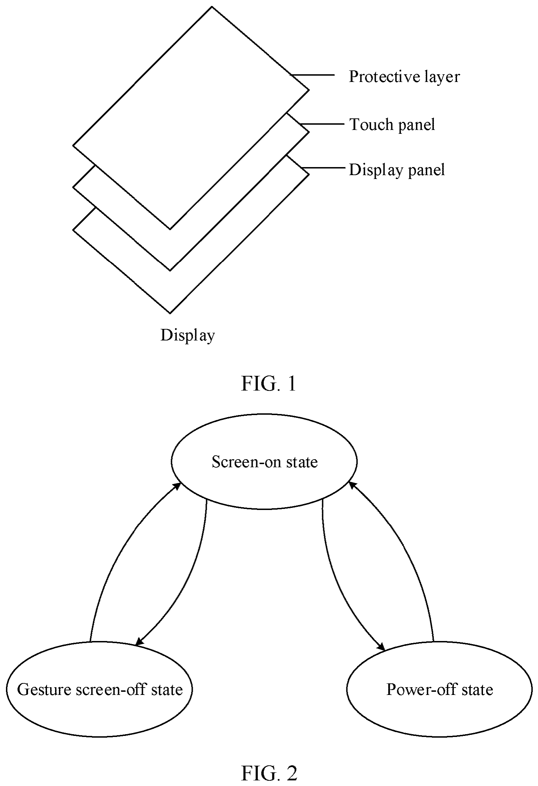

As shown in FIG. 1, the display may include a protective layer, a touch panel, and a display panel.

The protective layer is configured to protect a structure of the display.

The touch panel may also be referred to as a touch sensor, a touch layer, or the like. The touch panel may include a sensing module and a touch panel integrated circuit. The sensing module of the touch panel may sense/respond to a touch operation, and transfer a touch signal of the touch operation to the touch panel integrated circuit. The touch panel integrated circuit may analyze the touch signal transferred by the sensing module, determine a touch point location for the touch operation, and report the touch point location to a processor (for example, an application processor) of the electronic device, so that the processor of the electronic device responds to the touch operation.

The display panel may also be referred to as a display layer. The display panel may be configured to display an interface of the electronic device. The display panel and the touch panel may be used together, so that the display has both a display function and a touch function. The touch panel may be located above the display panel.

The touch panel integrated circuit may be a control module of the touch panel. The touch panel integrated circuit may work in different working states, and the touch panel is also controlled to work in a corresponding working state. The touch panel integrated circuit may have a plurality of different working states. For example, the working state of the touch panel integrated circuit may be a screen-on state or a power-off state. When the working state of the touch panel integrated circuit is the screen-on state, the electronic device is in a screen-on state. When the working state of the touch panel integrated circuit is the power-off state, the electronic device is in a screen-off state and does not respond to a gesture operation. The power-off state may also be referred to as a power-off screen-off state.

As technologies such as always on display (Always On Display, AOD) and fingerprint on display are popularized, the electronic device needs to respond to a gesture operation of the user even in the screen-off state. In this case, the plurality of working states of the touch panel integrated circuit may further include a gesture screen-off state. The gesture screen-off state may refer to a state in which the display panel of the electronic device is not on, the electronic device is in the screen-off state, but the touch panel may work, for example, both the sensing module and the touch panel integrated circuit in the touch panel work/are powered on, and may sense a touch operation and report a touch point location. In other words, when the working state of the touch panel integrated circuit is the gesture screen-off state, the electronic device is in a screen-off state but responds to a touch operation, for example, a touch operation.

The electronic device may switch between different working states, so as to control the touch panel integrated circuit to work in different scenarios. For example, the electronic device switches between the screen-on state, the gesture screen-off state, and the power-off state.

As shown in FIG. 2, in the screen-on state, the electronic device is in a screen-on state and responds to a touch operation of the user. The electronic device may switch from the screen-on state to the power-off state. For example, the electronic device receives a screen-off operation of the user, and when a gesture function is not enabled, the electronic device may switch the working state of the touch panel integrated circuit from the screen-on state to the power-off state. In the power-off state, the electronic device is in a screen-off state and does not respond to any touch operation of the user.

The electronic device may further switch from the screen-on state to the gesture screen-off state. For example, the electronic device receives a screen-off operation of the user, and when the gesture function is enabled, the electronic device may switch the working state of the touch panel integrated circuit from the screen-on state to the gesture screen-off state. In the gesture screen-off state, the electronic device is in a screen-off state and responds to a touch operation of the user.

It may be understood that the gesture function of the electronic device may be enabled or disabled according to a user instruction. For example, the electronic device may provide a setting option for the gesture function. The user may select to enable or disable the gesture function from the setting option for the gesture function. In response to a user instruction to enable or disable the gesture function, the electronic device enables or disables the gesture function. With the gesture function enabled, the electronic device responds to a touch operation of the user even in the screen-off state.

In the gesture screen-off state, the electronic device is in a screen-off state but responds to a touch operation of the user. The electronic device may switch from the gesture screen-off state to the screen-on state. For example, in the gesture screen-off state, the electronic device receives a touch operation of the user. For example, the touch operation may be an "L" type touch gesture. If the electronic device receives the "L" type touch operation in the gesture screen-off state, the electronic device switches to the screen-on state in response to the touch operation.

In the power-off state, the electronic device is in a screen-off state and does not respond to a touch operation of the user. The electronic device may switch from the power-off state to the screen-on state. For example, in the power-off state, the electronic device receives a user operation of pressing a screen-on key. In response to the user operation, the electronic device switches to the screen-on state.

It may be understood that screen-on or screen-off of the electronic device may be described in terms of the display panel of the display. Because the display of the electronic device includes the display panel and the touch panel, the electronic device may control the display panel to perform a display function and control the touch panel to perform a touch function, without affecting each other. Therefore, the electronic device may respond to a touch operation of the user by controlling the touch panel, even in the screen-off state, for example, the electronic device controls the display panel not to work/controls the display panel to be in a screen-off state.

After detecting a user operation (for example, a touch operation), the touch panel integrated circuit of the electronic device may notify the processor of the electronic device through an interrupt request. The interrupt request may be triggered by a low level of an interrupt pin of the touch panel integrated circuit, for example, the interrupt pin of the touch panel integrated circuit is powered up to a high level by using a voltage drain to drain (VDD). After the user operation is responded to, a level of the interrupt pin may be set to a low level to trigger an interrupt request, so as to notify the electronic device of the user operation in the manner of the interrupt request. In addition, the touch panel integrated circuit may further store touch point coordinates corresponding to the user operation in the memory, so that the electronic device obtains, in response to the interrupt request from the touch panel integrated circuit, the touch point coordinates corresponding to the user operation, determines a touch event corresponding to the user operation, and handles the touch event responded to.

The interrupt pin of the touch panel integrated circuit also drops to a low level. In this case, although no touch operation occurs, because the interrupt pin drops to the low level, the touch panel integrated circuit is triggered to report the interrupt request. Because the interrupt request in this scenario is not triggered in response to the user operation, the interrupt request may be referred to as an invalid interrupt request. In the case of abnormal power failure of the touch panel integrated circuit, if such case is not handled in time, the interrupt pin of the touch panel integrated circuit is at a low level for a long time, and the touch panel integrated circuit reports a large quantity of invalid interrupt requests, as a result, the processor of the electronic device receives a large quantity of invalid interrupt requests. However, for the processor of the electronic device, after an interrupt request reported by the touch panel integrated circuit is received, the processor still occupies processing resources to analyze and process the interrupt request reported by the touch panel integrated circuit. This causes abnormal occupation of processing resources of the electronic device, and may even lead to a crash of the electronic device, which severely affects user experience.

In view of this, in the method provided in embodiments of this application, the electronic device detects a first interrupt request from the touch panel integrated circuit, and in response to the first interrupt request, the electronic device may determine whether an interrupt exception event occurs in the touch panel integrated circuit. The interrupt exception event indicates that an exception occurs on an interrupt request from the touch panel integrated circuit, for example, a large quantity of interrupt requests (for example, invalid interrupt requests) from the touch panel integrated circuit are received in a short time. If the interrupt exception event occurs in the touch panel integrated circuit, the electronic device shields an interrupt request from the touch panel integrated circuit, and notifies a system process at a user layer of the electronic device through the first notification information, so that the system process no longer instructs to enable an interrupt response for use in response to an interrupt message from the touch panel integrated circuit.

In this manner, when the electronic device receives a large quantity of interrupt requests from the touch panel integrated circuit in a short time, the electronic device may shield the interrupt requests from the touch panel integrated circuit, disable interrupt responses to the interrupt requests, and no longer respond to the interrupt requests from the touch panel integrated circuit. As such, impact of the interrupt exception event of the touch panel integrated circuit on the electronic device may be reduced, and crashes of the electronic device may be reduced. In addition, while the interrupt exception event occurs in the touch panel integrated circuit, the electronic device does not enable an interrupt response to an interrupt request again, so that impact of the interrupt exception event may be minimized.

It may be understood that the system process of the electronic device may be a service process of the touch panel integrated circuit at the user layer. The system process may control the touch panel integrated circuit, for example, instruct to enable an interrupt response. If the electronic device enables the interrupt response again after the interrupt response is disabled, the electronic device may receive a large quantity of invalid interrupt requests from the touch panel integrated circuit again, which affects performance of the electronic device. When the interrupt exception event occurs in the touch panel integrated circuit of the electronic device, the electronic device notifies the system process through the first notification information, so as to instruct a system process at an upper layer to no longer instruct to enable the interrupt response, thereby reducing the possibility that the interrupt exception event occurring in the touch panel integrated circuit affects the electronic device again.

In this case, the interrupt exception event may be determined in a plurality of manners. For example, when the electronic device receives interrupt requests from the touch panel integrated circuit at a frequency greater than a preset frequency threshold, it may be considered that the interrupt exception event occurs in the touch panel integrated circuit. For another example, when the electronic device receives a preset quantity of interrupt requests at an average time interval less than preset duration, it may be considered that the interrupt exception event occurs in the touch panel integrated circuit. The preset frequency threshold, the preset quantity, and the preset duration may be set according to an actual application scenario, which is not limited herein.

In some implementations, the electronic device may further indicate, through a second state, that the touch panel integrated circuit is in a power-on state or a normal working state. In the second state of the touch panel integrated circuit, the system process may instruct to enable an interrupt response to an interrupt message. For example, after abnormal power failure of the touch panel integrated circuit, if power is restored, the system process may instruct the touch driver to enable the interrupt response to the interrupt message, so as to receive an interrupt request from the touch panel integrated circuit.

To handle the interrupt exception event that occurs in the touch panel integrated circuit, in some implementations, for the working states of the touch panel integrated circuit, in addition to the screen-on state, the gesture screen-off state, and the power-off state, an interrupt protection state is further added to the electronic device.

The interrupt protection state may be a temporary abnormal working state added to the electronic device when the interrupt exception event occurs in the touch panel integrated circuit. When the electronic device detects that the interrupt exception event occurs in the touch panel integrated circuit, the electronic device may switch the working state to the interrupt protection state. In the interrupt protection state, the electronic device shields interrupt requests from the touch panel integrated circuit, and forces the touch panel integrated circuit to be powered off. The interrupt protection state is similar to the power-off state. However, unlike the power-off state, in the interrupt protection state, the electronic device may be in a screen-on state but does not respond to a touch operation of the user. As such, an exception that occurs in the touch panel integrated circuit may be handled without affecting work of the display panel of the electronic device.

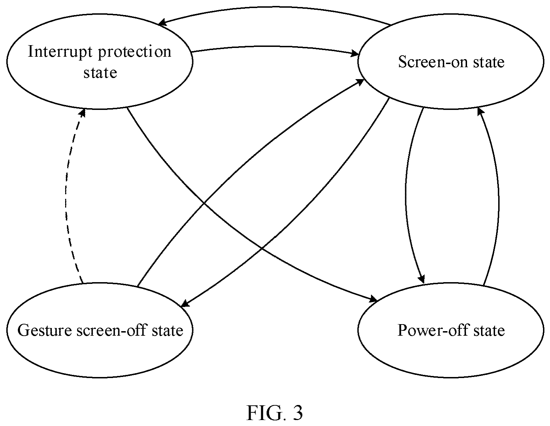

As shown in FIG. 3, the touch panel integrated circuit of the electronic device may switch between the screen-on state, the gesture screen-off state, the power-off state, and the interrupt protection state.

In the screen-on state, the display panel of the electronic device is in a screen-on state and responds to a touch operation of the user. If the electronic device detects an interrupt exception event in the screen-on state, the electronic device may switch from the screen-on state to the interrupt protection state. In this case, the electronic device may be in a screen-on state but does not respond to any touch operation of the user. Alternatively, the electronic device in the screen-on state receives a screen-off operation of the user, and when a gesture function is not enabled, the electronic device may switch the working state of the touch panel integrated circuit from the screen-on state to the interrupt protection state. In this case, the electronic device is in a screen-off state and does not respond to any touch operation of the user.

In the gesture screen-off state, the electronic device is in a screen-off state and responds to a touch operation of the user. If the electronic device detects an interrupt exception event in the gesture screen-off state, the electronic device may switch from the gesture screen-off state to the interrupt protection state. In this case, the electronic device is in a screen-off state and does not respond to any touch operation of the user.

The electronic device may further switch from the interrupt protection state to the screen-on state or the power-off state. For example, when the electronic device receives a user operation of pressing a power key, the electronic device may switch from the interrupt protection state to the screen-on state or the power-off state. For another example, when the electronic device receives an exception recovery notification, the electronic device may switch the interrupt protection state to the screen-on state or the power-off state.

For a process of switching the electronic device between the screen-on state, the gesture screen-off state, and the power-off state, reference may be made to description of FIG. 2. Details are not described herein again.

For example, the electronic device in the embodiments of this application may be a device such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)\a virtual reality (virtual reality, VR) device, a media player, or a wearable device. A specific form of the electronic device is not specially limited in this embodiment of this application.

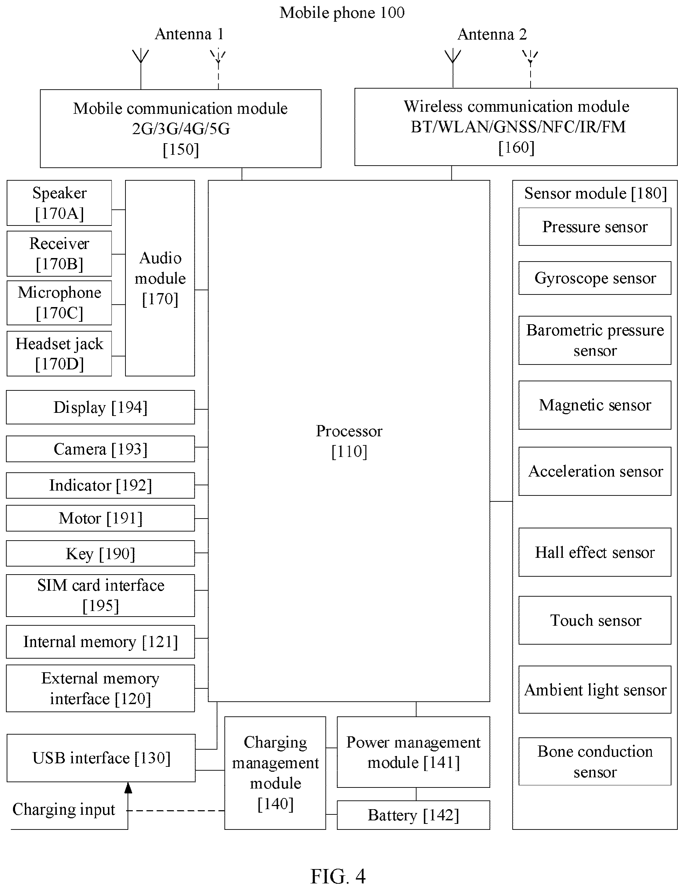

In this embodiment of this application, that the electronic device is a mobile phone 100 is used as an example to describe a hardware structure of the electronic device. As shown in FIG. 4, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), a driver processor, and the like. Different processing units may be independent devices, or may be integrated into one or more processors. The processor 110 may be a nerve center and a command center of the mobile phone 100. The processor 110 may generate an operation control signal based on instruction operation code and a timing signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor may directly invoke the instructions or the data from the memory, to prevent repeated access and reduce waiting time of the processor 110, thereby improving system efficiency.

The external memory interface 120 may be configured to connect to an external memory card such as a Micro SD card, to extend a storage capability of the mobile phone 100. The external memory card communicates with the processor 110 by using the external memory interface 120, to implement a data storage function. For example, files such as music and videos are stored in the external memory card.

The internal memory 121 may be configured to store computer-executable program code, and the executable program code includes instructions. The processor 110 runs the instructions stored in the internal memory 121, to perform various function applications and data processing of the mobile phone 100. For example, in this embodiment of this application, the processor 110 may execute the instructions stored in the internal memory 121, and the internal memory 121 may include a program storage area and a data storage area.

The program storage area may store an operating system, an application required by at least one function (for example, a sound playback function and an image playing function), a configuration file of the motor 191, and the like. The data storage area may store data (for example, audio data and a phone book) and the like created during use of the mobile phone 100. In addition, the internal memory 121 may include a high-speed random access memory, and may further include a nonvolatile memory, for example, at least one magnetic disk storage device, a flash memory device, or a universal flash storage (universal flash storage, UFS).

The charging management module 140 is configured to receive a charging input from a charger. The charger may be a wireless charger or a wired charger. The charging management module 140 may supply power to the mobile phone 100 by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. In some embodiments, the power management module 141 and the charging management module 140 may alternatively be disposed in the same component.

A wireless communication function of the mobile phone 100 may be implemented through the antenna 1, the antenna 2, the mobile communication module 150, the wireless communication module 160, the modem processor, the baseband processor, and the like. In some embodiments, the antenna 1 and the mobile communication module 150 of the mobile phone 100 are coupled, and the antenna 2 and the wireless communication module 160 of the mobile phone are coupled, so that the mobile phone 100 can communicate with a network and another device by using a wireless communication technology.

The antenna 1 and the antenna 2 are configured to transmit or receive an electromagnetic wave signal. Each antenna in the mobile phone 100 may be configured to cover one or more communication bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a solution to wireless communication including 2G/3G/4G/5G and the like applied to the mobile phone 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation.

The mobile communication module 150 may further amplify a signal obtained after modulation by the modem processor, and convert, through the antenna 1, an amplified signal into an electromagnetic wave for radiation. In some embodiments, at least some functional modules of the mobile communication module 150 may be disposed in the processor 110. In some embodiments, at least some functional modules of the mobile communication module 150 may be disposed in the same component as at least some modules of the processor 110.

The wireless communication module 160 may provide a solution to wireless communication that is applied to the mobile phone 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like.

The wireless communications module 160 may be one or more devices integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the to-be-sent signal into an electromagnetic wave for radiation.

The mobile phone 100 may implement an audio function, such as music playing and recording, by using the audio module 170, the speaker 170A, the receiver 170B, the microphone 170C, the headset jack 170D, the application processor, and the like.

The sensor module 180 may include sensors such as a pressure sensor, a gyroscope sensor, a barometric pressure sensor, a magnetic sensor, an acceleration sensor, a Hall effect sensor, a touch sensor, an ambient light sensor, and a bone conduction sensor. The mobile phone 100 may collect various data by using the sensor module 180.

The mobile phone 100 implements a display function by using the GPU, the display 194, the application processor, and the like. The GPU is a microprocessor for image processing and connects the display 194 and the application processor. The GPU is configured to perform mathematical and geometric computing for graphics rendering. The processor 110 may include one or more GPUs, which execute program instructions to generate or change display information.

The display 194 is configured to display an image, a video, or the like. The display 194 includes a display panel and a touch panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flex light-emitting diode (flex light-emitting diode, FLED), a MiniLED, a MicroLED, a Micro-OLED, a quantum dot light emitting diode (quantum dot light emitting diodes, QLED), or the like. The touch panel may also be referred to as a "touch sensor". The touch panel may be disposed on the display 194. The touch panel and the display panel constitute a touch screen, which is also referred to as a "touchscreen". The touch panel is configured to detect a touch operation performed on or near the touch panel. The display panel may transfer the detected touch operation to the application processor to determine a type of a touch event. The display 194 may provide a visual output related to the touch operation. In some other embodiments, the touch panel may alternatively be disposed on a surface of the display 194, and is located at a position different from that of the display panel.

The mobile phone 100 may implement a shooting function by using the ISP, the camera 193, the video codec, the GPU, the display 194, the application processor, and the like. The ISP is configured to process data fed back by the camera 193. The camera 193 is configured to capture a still image or a video. In some embodiments, the mobile phone 100 may include one or more cameras 193.

The key 190 includes a power key, a volume key, and the like. The key 190 may be a mechanical key, or may be a touch key. The motor 191 may generate a vibration alert. The motor 191 may be configured to provide a vibration alert for an incoming call, or may be configured to provide vibration feedback for touch. The indicator 192 may be an indicator light, may be configured to indicate a charging status or a power change, or may be configured to indicate a message, a missed call, a notification, and the like.

The SIM card interface 195 is configured to connect to a SIM card. The SIM card may be inserted into the SIM card interface 195 or plugged from the SIM card interface 195, to come into contact with or be separated from the mobile phone 100. The mobile phone 100 may support one or more SIM card interfaces. The SIM card interface 195 may support a Nano SIM card, a Micro SIM card, a SIM card, or the like.

It may be understood that an interface connection relationship between the modules shown in this embodiment is merely an example for description, and does not constitute a limitation on the structure of the electronic device. In some other embodiments, the electronic device may alternatively include more or fewer modules than those provided in the foregoing embodiment, and the modules may use an interface connection manner different from that in the foregoing embodiment, or use a combination of a plurality of interface connection manners. For a hardware structure of the electronic device provided in this embodiment of this application, reference may be made to the hardware structure of the mobile phone 100 shown in the figure. Methods in the following embodiments may all be implemented in an electronic device having the foregoing hardware structure.

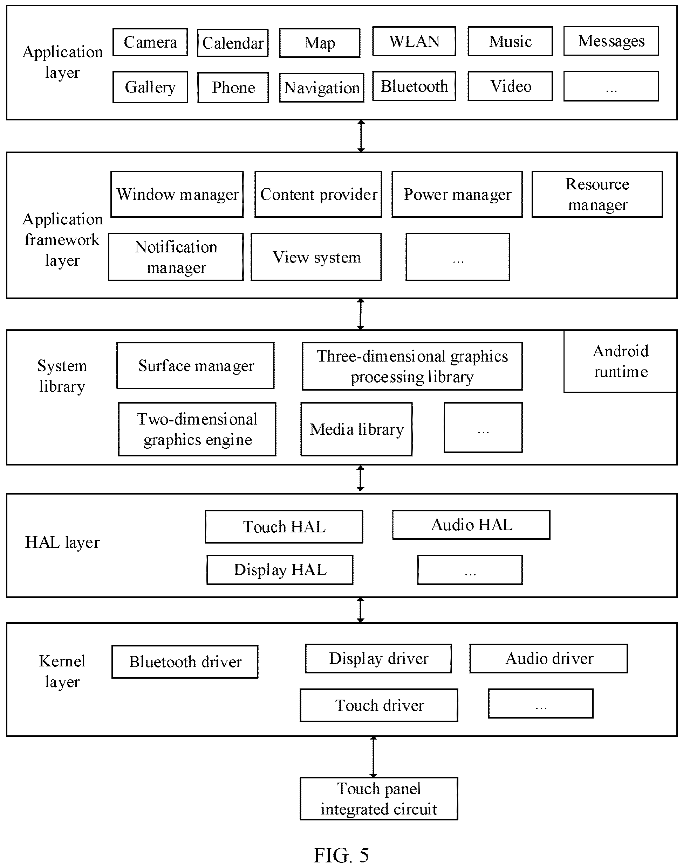

A software system of the electronic device may use a layered architecture, an event-driven architecture, a microkernel architecture, a microservice architecture, or a cloud architecture. As shown in FIG. 5, in this embodiment of this application, that the electronic device is the mobile phone 100 is used as an example to describe a software structure of the electronic device, where a software system of the electronic device uses a layered architecture of an Android (Android) system.

FIG. 5 is a block diagram of a software structure of an electronic device using a mobile phone 100 as an example according to an embodiment of this application. In the layered architecture, software is divided into several layers, and each layer has a clear role and task. The layers communicate with each other through software interfaces. In some embodiments, the Android system may include an application layer, an application framework layer, an Android runtime (Android runtime) and system library, a hardware abstraction layer (hardware abstraction layer, HAL), and a kernel layer.

The application layer may include a series of application packages, for example, the application packages may include applications such as Camera, Gallery, Calendar, Phone, Map, Navigation, WLAN, Bluetooth, Music, Video, and Messages. This is not limited in this embodiment of this application.

The application framework layer provides an application programming interface (application programming interface, API) and a programming framework for applications at the application layer. The application framework layer includes some predefined functions. For example, the application framework layer may include a window manager, a content provider, a view system, a power manager, a resource manager, a notification manager, and the like. This is not limited in this embodiment of this application.

The Android runtime includes a kernel library and a virtual machine. The Android runtime is responsible for scheduling and management of the Android system. The kernel library includes two parts: functional functions that need to be invoked by a java language, and a kernel library of Android. The application layer and the application framework layer run in the virtual machine. The virtual machine executes java files at the application layer and the application framework layer as binary files. The virtual machine is configured to perform functions such as lifecycle management of an object, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The HAL layer is a package for a Linux kernel driver, provides an interface to a higher-level layer, and shields implementation details of underlying hardware. For example, the HAL layer may include a display HAL, a touch HAL, an audio HAL, and the like.

The kernel layer is a layer between hardware and software. The kernel layer includes a driver and a system program. The driver includes at least a display driver, a Bluetooth driver, an audio driver, a touch driver, and the like.

The following describes an example of a working procedure of software and hardware of the mobile phone 100 with reference to a touch screen-on scenario.

When the mobile phone 100 is in a screen-off state, the touch panel of the mobile phone 100 receives a touch operation of the user, such as a touch operation of double-tapping a screen. The touch panel integrated circuit of the touch panel sends an interrupt request to the kernel layer of the mobile phone 100, so as to notify the kernel layer of a preset touch operation. The kernel layer processes the touch operation into an original input event (including information such as touch coordinates, and a timestamp of the touch operation). Information about the original input event is stored at the kernel layer. The application framework layer obtains the original input event from the kernel layer, and identifies a control corresponding to the original input event. For example, the touch operation is corresponding to a screen-on event in a screen-off scenario, a control corresponding to the touch operation may be a power manager. The power manager invokes the display driver at the kernel layer, then the display driver controls the display to be in a screen-on state.

In the following embodiments, an example in which the electronic device is the mobile phone shown in FIG. 4 is used to describe the method provided in this embodiment of this application. In this embodiment of this application, the display of the mobile phone includes a touch panel and a display panel. The touch panel includes a touch panel integrated circuit, and the touch panel integrated circuit is a control module of the touch panel. The kernel layer of the mobile phone includes a touch driver. The mobile phone may interact with the touch panel integrated circuit by using the touch driver to control the touch panel integrated circuit.

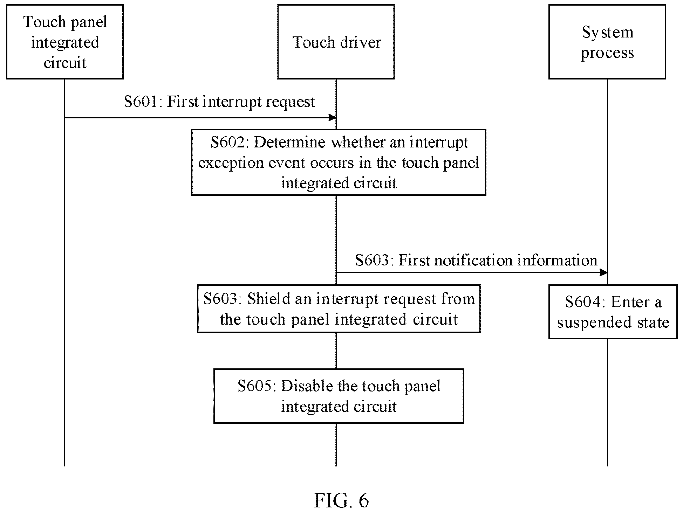

As shown in FIG. 6, the method provided in this embodiment of this application may include the following steps.

S601: The touch driver of the mobile phone receives a first interrupt request from the touch panel integrated circuit.

The touch panel integrated circuit of the mobile phone may send the first interrupt request to the application processor of the mobile phone by using the interrupt pin. For example, when the touch panel integrated circuit receives a touch operation of the user, it may set the interrupt pin to a low level to trigger the first interrupt request through the low level. The touch driver of the application processor receives the first interrupt request from the touch panel integrated circuit. In this case, the touch panel integrated circuit of the mobile phone may be in any one of a screen-on state, a gesture screen-off state, and an interrupt protection state.

For example, the touch driver includes an interrupt thread (irq_thread). The interrupt thread receives the first interrupt request from the touch panel integrated circuit.

Herein, the interrupt pin of the touch panel integrated circuit may be connected to a receiving pin of the application processor. The touch driver of the application processor may directly receive, by using the receiving pin, the first interrupt request sent from the touch panel integrated circuit by using the interrupt pin. Alternatively, the mobile phone may further include an interrupt controller. The interrupt controller is respectively connected to the touch panel integrated circuit and the application processor. The interrupt controller receives the first interrupt request from the touch panel integrated circuit, and forwards the first interrupt request to the application processor.

S602: The touch driver of the mobile phone determines, in response to the first interrupt request, whether an interrupt exception event occurs in the touch panel integrated circuit.

The touch driver of the mobile phone detects, in response to the first interrupt request, whether an interrupt exception event occurs in the touch panel integrated circuit. For example, in response to the first interrupt request, the touch driver invokes the interrupt thread to determine whether an interrupt exception event occurs in the touch panel integrated circuit.

The interrupt exception event indicates that a large quantity of interrupt requests are received in a short time, or is understood that a relatively large quantity of terminal requests are received in a short time, which is greater than a preset quantity threshold, or may be alternatively understood that an exception occurs on a sending state (for example, single sending duration, a sending interval, and/or a sending quantity) of the interrupt requests, and the sending state does not meet a requirement. A name of the interrupt exception event is not limited in this application, and may be alternatively described as an interrupt storm or another name.

For example, when an average time interval for receiving interrupt requests is less than preset duration, a large quantity of interrupt requests received in a short time are determined. Specifically, the touch driver of the mobile phone may count total duration for receiving a preset quantity of interrupt requests, and then calculate a ratio of the total duration to the preset quantity to obtain an average time interval for the touch driver to receive the interrupt requests. If the average time interval is less than the preset duration, it means that the touch driver receives a large quantity of interrupt requests from the touch panel integrated circuit in a short time, and it may be considered that an interrupt exception event may occur in the touch panel integrated circuit. If the average time interval is greater than or equal to the preset duration, the touch driver does not receive a large quantity of interrupt requests from the touch panel integrated circuit in a short time, and it may be considered that the interrupt exception event does not occur in the touch panel integrated circuit.

The mobile phone responds to a touch operation of the user in both the screen-on state and the gesture screen-off state of the touch panel integrated circuit. In some implementations, the touch driver of the mobile phone responds to the first interrupt request, and determines whether an interrupt exception event occurs in the touch panel integrated circuit when the working state of the touch panel integrated circuit is the screen-on state or the gesture screen-off state. As such, in the screen-on state and the gesture screen-off state, the mobile phone enables detection of an interrupt exception event, so as to reduce impact of the interrupt exception event of the touch panel integrated circuit on a user to operate the mobile phone.

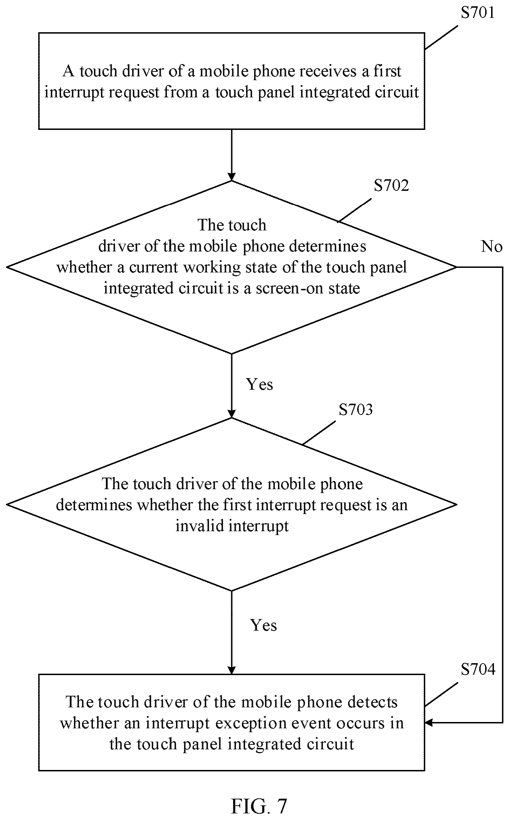

In the screen-on state, the user uses the mobile phone at a relatively high frequency. The touch driver of the mobile phone may receive a large quantity of touch messages from the touch panel integrated circuit in the screen-on state. To reduce false detection of an interrupt exception event in the screen-on state, in some implementations, after receiving the first interrupt request from the touch panel integrated circuit, the touch driver of the mobile phone may first determine whether a current working state of the touch panel integrated circuit is the screen-on state. As shown in FIG. 7, the method provided in this implementation may include the following steps.

S701: The touch driver of the mobile phone receives a first interrupt request from the touch panel integrated circuit.

For this step, reference may be made to the foregoing description of S601. Details are not described herein again.

S702: The touch driver of the mobile phone determines whether the current working state of the touch panel integrated circuit is the screen-on state.

The touch driver of the mobile phone may, in response to the first interrupt request, obtain a working state of the touch panel integrated circuit. For example, the working state of the touch panel integrated circuit may be indicated by a working state identifier. The working state identifier may be a first identifier, a second identifier, a third identifier, or a fourth identifier. The first identifier indicates a screen-on state, the second identifier may indicate a gesture screen-off state, the third identifier indicates a power-off state, and the fourth identifier indicates an interrupt exception state. The touch driver may obtain the working state identifier of the touch panel integrated circuit. If the working state identifier is the first identifier, it may be considered that the current working state of the touch panel integrated circuit is the screen-on state.

If the working state of the touch panel integrated circuit is the screen-on state, the touch driver of the mobile phone performs S703.

If the working state of the touch panel integrated circuit is not the screen-on state, the touch driver of the mobile phone performs S704.

S703: The touch driver of the mobile phone determines whether the first interrupt request is an invalid interrupt.

If the working state of the touch panel integrated circuit is the screen-on state, the mobile phone is in a screen-on state and responds to a touch operation of the user. In the screen-on state, the touch driver may receive a large quantity of interrupt requests from the touch panel integrated circuit. To reduce misjudgment of an interrupt exception event, the touch driver may further determine whether the received first interrupt request is an invalid interrupt when determining that the current working state of the touch panel integrated circuit is the screen-on state.

For example, the touch driver of the mobile phone may read touch data (for example, the touch point coordinates) corresponding to the first interrupt request. If the touch data is not in a preset data format (for example, the touch data is not in a two-dimensional array format), or the touch data is a preset invalid value (for example, "0, 0"), it may be considered that the first interrupt request is an invalid interrupt.

If the first interrupt request is an invalid interrupt, the touch driver of the mobile phone performs S704.

If the first interrupt request is not an invalid interrupt, the touch driver of the mobile phone reports a touch event of the first interrupt request to the user layer. For example, the first interrupt request may be a touch operation of the user to enable a video application. After determining that the first interrupt request is not an invalid interrupt, the touch driver of the mobile phone may report, to the user layer, a touch event to enable the video application. After receiving the touch event, the user layer of the mobile phone may start the video application.

S704: The touch driver of the mobile phone detects whether an interrupt exception event occurs in the touch panel integrated circuit.

The touch driver of the mobile phone detects whether an interrupt exception event occurs in the touch panel integrated circuit. The interrupt exception event indicates that an average time interval for the touch driver to receive a preset quantity of interrupt requests is less than preset duration.

The preset quantity and the preset duration herein may be set based on an actual application scenario or a requirement. For example, the preset quantity may be set to a value such as 100 or 200. The preset duration may be set to a value such as 2.5 ms or 2.7 ms.

It may be understood that the touch driver of the mobile phone may perform different processing on an interrupt request received in the screen-on state and an interrupt request received in the gesture screen-off state.

In the screen-on state, the user operates the mobile phone at a relatively high frequency, and the touch panel integrated circuit of the mobile phone reports (that is, sends an interrupt request) to the application processor of the mobile phone at up to 360 Hz. An average reporting period of the touch panel integrated circuit is relatively short, and may be up to 2.7 ms. The application processor receives a large quantity of interrupt messages in a short time, but this is probably caused by frequent operation of the mobile phone by the user. Therefore, in the screen-on state, the touch driver in the application processor may further determine whether the currently received first interrupt message is an invalid interrupt. If the first interrupt message is an invalid interrupt, the touch driver then detects whether an interrupt exception event occurs in the touch panel integrated circuit. As such, misjudgment of an interrupt exception event in the screen-on state may be reduced.

In the gesture screen-off state, the user operates the mobile phone at a relatively low frequency, and under a normal condition, the touch panel integrated circuit usually does not report to the application processor frequently. If the application processor receives a large quantity of interrupt messages in a short time, it may be caused by an exception that occurs in the touch panel integrated circuit. Therefore, in the gesture screen-off state, when an interrupt request (for example, the first interrupt request) is received, the touch driver in the application processor may detect whether an interrupt exception event occurs in the touch panel integrated circuit.

In the power-off state, the touch driver of the mobile phone does not respond to any interrupt request from the touch panel integrated circuit. In the interrupt exception state, the touch driver of the mobile phone has detected an interrupt exception event of the touch panel integrated circuit. In this case, the touch driver no longer detects the interrupt exception event of the touch panel integrated circuit again.

S603: If the interrupt exception event occurs in the touch panel integrated circuit, the touch driver of the mobile phone sends first notification information to a system process of the mobile phone, and shields an interrupt request from the touch panel integrated circuit.

The first notification information is used to notify the system process not to instruct the touch driver to enable an interrupt response. When the interrupt exception event occurs in the touch panel integrated circuit of the mobile phone, the touch driver of the mobile phone notifies the system process through the first notification information, so as to instruct the system process to no longer instruct the touch driver to enable the interrupt response.

When it is determined that the interrupt exception event occurs in the touch panel integrated circuit, in addition to sending the first notification information to the system process, the touch driver of the mobile phone further shields an interrupt request from the touch panel integrated circuit, that is, disables an interrupt response to the interrupt request. For example, the mobile phone has an interrupt permission flag bit that is used to control whether the application processor responds to the interrupt request from the touch panel integrated circuit. The touch driver of the application processor may set the interrupt permission flag bit to 0. When the interrupt permission flag bit is 0, the application processor no longer responds to the interrupt request from the touch panel integrated circuit.

In this manner, when the interrupt exception event occurs in the touch panel integrated circuit, the touch driver of the mobile phone no longer responds to the interrupt request from the touch panel integrated circuit, which can reduce impact of the interrupt exception event of the touch panel integrated circuit on another function other than the touch function of the mobile phone.

S604: The system process of the mobile phone enters a suspended state.

The system process may be a system-level service process at the user layer of the mobile phone. For example, the system process may be a daemon process. The system process may communicate with the touch driver to control the touch panel integrated circuit by using the touch driver. For example, the system process may instruct the touch driver to enable an interrupt response. Alternatively, the system process may instruct the touch driver to update a driver (or referred to as firmware upgrade). The touch driver may control the touch panel integrated circuit according to an instruction of the system process.

The system process may enter a suspended state after obtaining the first notification information from the touch driver. The suspended state may be a state in which no instruction is initiated to the touch driver. After the system process of the mobile phone obtains the first notification information from the touch driver, the system process no longer sends a control instruction to the touch driver to instruct the touch driver to enable the interrupt response.

In this manner, when the interrupt exception event occurs in the touch panel integrated circuit, a system process at an upper layer of the mobile phone does not instruct the touch driver again to enable the interrupt response. As such, while the interrupt exception event occurs in the touch panel integrated circuit, the mobile phone may remain in a state of disabling the interrupt response.

In this embodiment of this application, if an interrupt exception event occurs in the touch panel integrated circuit, the touch driver of the mobile phone receives a large quantity of invalid interrupt requests. To better recover the touch panel integrated circuit from an exception, in some implementations, if an interrupt exception event occurs in the touch panel integrated circuit, this embodiment of this application further includes the following steps:
S605: The touch driver of the mobile phone disables the touch panel integrated circuit.

If an interrupt exception event occurs in the touch panel integrated circuit of the mobile phone, the touch driver of the mobile phone may force the touch panel integrated circuit to be powered off. For example, the touch driver of the mobile phone may invoke a power-off thread to control, by using the invoked power-off thread, the touch panel integrated circuit to be powered off.

In this case, to reduce conditions in which performance of a power-off operation on the touch panel integrated circuit blocks another process running in the mobile phone, the touch driver of the mobile phone may asynchronously process power-off of the touch panel integrated circuit. For example, the touch driver of the mobile phone may add a power-off command to power off the touch panel integrated circuit to a command queue for asynchronous processing. The touch driver may invoke a power-off command in a power-off thread processing task queue to implement power-off of the touch panel integrated circuit.

Asynchronous processing of power-off of the touch panel integrated circuit may be understood as that the interrupt thread that responds to the first interrupt request and the power-off thread that executes power-off of the touch panel integrated circuit are different threads. Detection of an interrupt exception event runs in the interrupt thread, which usually does not run time-consuming operations. After the touch driver detects the interrupt exception event, the touch driver invokes, through the command queue, the power-off thread to asynchronously perform a power-off operation on the touch panel integrated circuit, so as to implement asynchronous processing of power-off of the touch panel integrated circuit. As such, conditions in which handling of an interrupt exception event blocks another thread in the mobile phone system may be reduced, and impact of the interrupt exception event on performance of the mobile phone may be reduced.

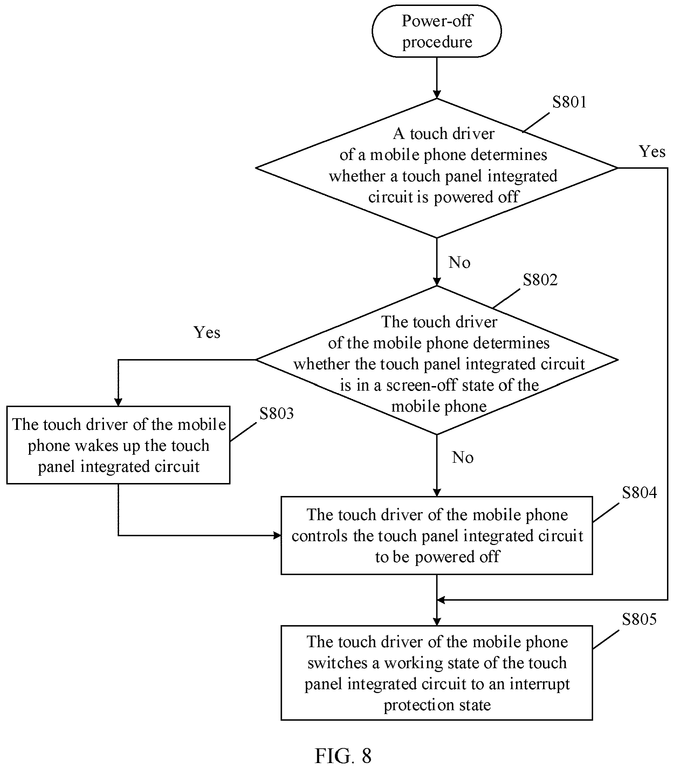

The following uses an example to describe a power-off procedure performed asynchronously by the touch driver after detecting an interrupt exception event. As shown in FIG. 8, the power-off procedure performed after the interrupt exception event occurs may include the following steps.

S801: The touch driver of the mobile phone determines whether the touch panel integrated circuit is powered off.

The touch driver of the mobile phone may invoke the power-off thread to execute the power-off procedure of the touch panel integrated circuit. The touch driver may first determine whether the touch panel integrated circuit is currently powered off. For example, the touch driver of the mobile phone may obtain a working state of the touch panel integrated circuit, and determine whether the working state of the touch panel integrated circuit is a power-off state.

If the touch panel integrated circuit is powered off, the touch driver of the mobile phone may perform S805.

If the touch panel integrated circuit is not powered off, the touch driver of the mobile phone may perform S802.

S802: The touch driver of the mobile phone determines whether the touch panel integrated circuit is in the screen-off state of the mobile phone.

If the touch panel integrated circuit is not powered off, the touch panel integrated circuit of the mobile phone further determines whether the working state of the touch panel integrated circuit is the screen-off state of the mobile phone.

If the touch panel integrated circuit is in a gesture screen-off state, the touch driver of the mobile phone may perform S803.

If the working state of the touch panel integrated circuit is not the gesture screen-off state, the touch driver of the mobile phone may perform S804.

S803: The touch driver of the mobile phone wakes up the touch panel integrated circuit.

If the working state of the touch panel integrated circuit is the gesture screen-off state, the touch driver of the mobile phone may first wake up the touch panel integrated circuit, so that the mobile phone is in the screen-on state.

S804: The touch driver of the mobile phone controls the touch panel integrated circuit to be powered off.

When the working state of the touch panel integrated circuit is a screen-on state, the touch driver of the mobile phone controls the touch panel integrated circuit to be powered off.

S805: The touch driver of the mobile phone switches the working state of the touch panel integrated circuit to an interrupt protection state.

After controlling the touch panel integrated circuit to be powered off, the touch driver of the mobile phone may switch the working state of the touch panel integrated circuit to the interrupt protection state.

In this example, when the touch driver controls the touch panel integrated circuit to be powered off, the touch driver may first switch the touch panel integrated circuit to the screen-on state, and then switch the touch panel integrated circuit from the screen-on state to the interrupt protection state. The touch driver may interact with a plurality of other modules (for example, a power manager and a display panel). To improve stability of switching the working state of the touch panel integrated circuit, the touch driver may switch the working state of the touch panel integrated circuit according to a fixed switching procedure. For the switching procedure, reference may be made to a direction indicated by a solid arrow in FIG. 3. It can be seen that the screen-on state points to the interrupt protection state. Therefore, when the touch panel integrated circuit is in another working state other than the screen-on state, the touch driver of the mobile phone may first switch the working state of the touch panel integrated circuit to the screen-on state, and then switch to the interrupt protection state. As such, the stability of switching the working state of the touch panel integrated circuit may be improved.

It may be understood that, when the touch panel integrated circuit works normally, the touch driver of the mobile phone may alternatively implement power-off of the touch panel integrated circuit through the foregoing power-off process. After the touch driver controls the touch panel integrated circuit to be powered off, the touch driver may switch the working state of the touch panel integrated circuit to the power-off state. Therefore, when the touch driver controls the touch panel integrated circuit to be powered off, if the working state of the touch panel integrated circuit is the gesture screen-off state, the touch driver first performs a screen-on procedure of the touch panel integrated circuit, and then performs a power-off procedure of the touch panel integrated circuit to switch the working state to the interrupt protection state or the power-off state. If the working state of the touch panel integrated circuit is the screen-on state, the touch driver directly performs the power-off procedure to switch the working state to the interrupt protection state or the power-off state.

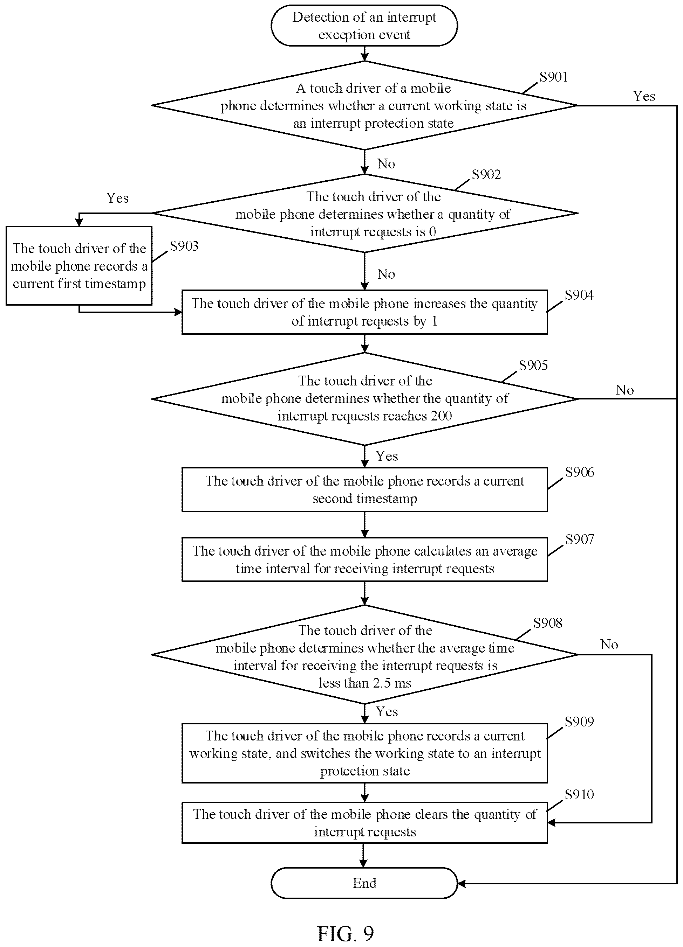

In S602, the touch driver of the mobile phone determines whether the interrupt exception event occurs in the touch panel integrated circuit. A process of detecting an interrupt exception event according to an embodiment of this application is described herein by way of an example. In this example, a preset quantity is 200, and preset duration is 2.5 ms. As shown in FIG. 9, the process of detecting the interrupt exception event may include the following steps.

S901: The touch driver of the mobile phone determines whether a current working state is an interrupt protection state.

The touch driver of the mobile phone detects whether an interrupt exception event occurs in the touch panel integrated circuit, and may first determine whether the current working state of the touch panel integrated circuit is the interrupt protection state.

If the current working state of the touch panel integrated circuit is the interrupt protection state, it indicates that the interrupt exception event has occurred in the touch panel integrated circuit, and the touch panel integrated circuit has not recovered from the interrupt exception event. In this case, the touch driver may no longer detect again whether the interrupt exception event occurs in the touch panel integrated circuit. The touch driver may end a current procedure for determining the interrupt exception event.

If the current working state of the touch panel integrated circuit is not the interrupt protection state, the touch driver may continue to perform S902.

S902: The touch driver of the mobile phone determines whether a quantity of interrupt requests is 0.

The quantity of interrupt requests may be recorded in the mobile phone. The quantity of interrupt requests is used to count interrupt requests received from the touch panel integrated circuit. The touch driver of the mobile phone may obtain the quantity of interrupt requests, and determine whether the quantity of interrupt requests is 0.

If the quantity of interrupt requests is 0, the touch panel integrated circuit of the mobile phone performs S903.

If the quantity of interrupt requests is not 0, the touch panel integrated circuit of the mobile phone performs S904.

S903: The touch driver of the mobile phone records a current first timestamp.

If the quantity of interrupt requests is 0, it indicates that a current period is a new statistical period for the quantity of interrupt requests. The touch driver of the mobile phone may then record a current moment as the first timestamp.

S904: The touch driver of the mobile phone increases the quantity of interrupt requests by 1.

The touch driver of the mobile phone receives a first interrupt request. As an interrupt request from the touch panel integrated circuit, the first interrupt request may be counted by the touch driver. The touch driver increases the count of the quantity of interrupt requests, so that the quantity of interrupt requests is increased by 1.

S905: The touch driver of the mobile phone determines whether the quantity of interrupt requests reaches 200.

The touch driver of the mobile phone compares a current quantity of interrupt requests with the preset quantity 200 to determine whether the current quantity of interrupt requests reaches 200.

If the current quantity of interrupt requests reaches 200, the touch driver of the mobile phone performs S906. For example, the current quantity of interrupt requests is 200, and the touch driver of the mobile phone continues to perform S906.

If the current quantity of interrupt requests does not reach 200, it indicates that the current quantity of interrupt requests does not reach a maximum count, and it cannot be determined that an interrupt exception event occurs in the touch panel integrated circuit. In this case, the touch driver of the mobile phone may end a current procedure for determining the interrupt exception event. For example, the current quantity of interrupt requests is 50, and 50 is less than 200, the touch panel integrated circuit of the mobile phone then ends the procedure for determining the interrupt exception event.

S906: The touch driver of the mobile phone records a current second timestamp.

If the current quantity of interrupt requests reaches 200, it indicates that the current quantity of interrupt requests reaches the maximum count. The touch panel integrated circuit of the mobile phone then records a current moment as the second timestamp.

S907: The touch driver of the mobile phone calculates an average time interval for receiving interrupt requests.

The touch driver of the mobile phone may calculate, based on the first timestamp and the second timestamp, duration for receiving 200 interrupt requests. The touch driver calculates a ratio of the duration to 200 to obtain an average time interval for receiving each interrupt request.

S908: The touch driver of the mobile phone determines whether the average time interval for receiving the interrupt requests is less than 2.5 ms.

The average time interval may reflect a frequency at which the touch panel integrated circuit receives an interrupt message. If the average time interval is excessively short, it indicates that a frequency of an interrupt message from the touch panel integrated circuit is excessively high, and an interrupt exception event may occur. The touch driver of the mobile phone may compare the calculated average time interval for receiving the interrupt message with the preset duration 2.5 ms, and determine whether the average time interval is less than 2.5 ms.

If the average time interval for receiving the interrupt requests is less than 2.5 ms, it may be considered that the interrupt exception event occurs in the touch panel integrated circuit. The touch driver of the mobile phone may perform S909.

If the average time interval for receiving the interrupt requests is greater than or equal to 2.5 ms, it may be considered that the interrupt exception event does not occur in the touch panel integrated circuit. The touch driver of the mobile phone performs S910.

S909: The touch driver of the mobile phone records a current working state, and switches the working state to the interrupt protection state.

If the touch driver of the mobile phone determines that the interrupt exception event occurs in the touch panel integrated circuit, the current working state may be recorded, and the working state is switched to the interrupt protection state.

When the touch driver of the mobile phone switches the working state to the interrupt protection state, reference may be made to an operation procedure shown in FIG. 8. Details are not described herein again.

S910: The touch driver of the mobile phone clears the quantity of interrupt requests.

After completing detection of the interrupt exception event, the touch driver of the mobile phone may reset the quantity of interrupt requests to 0, so as to recount the quantity of interrupt requests in a new round of detection of an interrupt exception event.

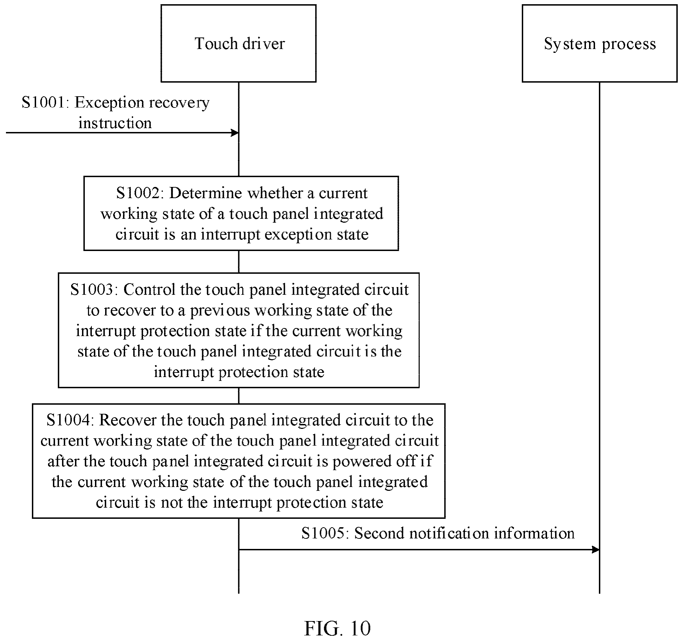

In this embodiment of this application, if the touch driver of the mobile phone determines that the interrupt exception event occurs in the touch panel integrated circuit, the touch driver may disable the interrupt response, and switch the working state of the touch panel integrated circuit to the interrupt protection state. In some implementations, the touch panel integrated circuit of the mobile phone recovers from the interrupt exception event. To recover the touch function of the touch panel integrated circuit as soon as possible, the touch driver of the mobile phone may control the touch panel integrated circuit of the touch driver to switch to a normal working state, for example, control the touch panel integrated circuit to recover to the screen-on state, the gesture screen-off state, or the power-off state. As shown in FIG. 10, the method provided in this embodiment of this application may further include the following steps.

S1001: The touch driver of the mobile phone receives an exception recovery instruction.

The touch driver of the mobile phone may interact with a plurality of other modules (for example, a power manager and a display panel) of the mobile phone. After an interrupt exception event occurs in the touch panel integrated circuit, the touch panel integrated circuit of the mobile phone may receive an exception recovery instruction sent by another module. The exception recovery instruction is used to instruct the touch panel integrated circuit to recover from the interrupt exception event. For example, the interrupt exception event of the mobile phone is caused by abnormal power failure of the touch panel integrated circuit. The touch driver of the mobile phone may receive an exception recovery instruction sent by the display panel, indicating that power supply of the touch panel integrated circuit has been restored.

S1002: In response to the exception recovery instruction, the touch driver of the mobile phone determines whether a current working state of the touch panel integrated circuit is an interrupt exception state.

After receiving an exception recovery instruction from another module, the touch driver of the mobile phone may first determine whether the current working state of the touch panel integrated circuit is the interrupt exception state. Because the interrupt exception state is a temporary abnormal working state, the touch panel integrated circuit of the mobile phone may perform different processing on the interrupt exception state and another working state other than the interrupt exception state. Therefore, after receiving the exception recovery instruction, the touch driver of the mobile phone may determine whether the current working state of the touch panel integrated circuit is the interrupt exception state.

S1003: The touch panel integrated circuit controls the touch panel integrated circuit to recover to a previous working state of the interrupt protection state if the current working state of the touch panel integrated circuit is the interrupt protection state.

If the current working state of the touch panel integrated circuit is the interrupt protection state, it indicates that an exception has occurred in the touch panel integrated circuit previously. Therefore, the touch driver may control the touch panel integrated circuit to recover to the previous working state of the interrupt protection state, that is, control the touch panel integrated circuit to recover to a working state before the interrupt exception event occurs.

S1004: The touch driver recovers the touch panel integrated circuit to the current working state of the touch panel integrated circuit after the touch panel integrated circuit is powered off if the current working state of the touch panel integrated circuit is not the interrupt protection state.

If the current working state of the touch panel integrated circuit is not the interrupt protection state, it is possible that the mobile phone changes the working state of the touch panel integrated circuit in response to a user operation during the interrupt exception event of the touch panel integrated circuit. In this case, the touch driver of the mobile phone may recover the touch panel integrated circuit to the current working state after the touch panel integrated circuit is powered off.

For example, the mobile phone switches the working state of the touch panel integrated circuit to the power-off state in response to a user's shutdown operation of pressing a power key. In this case, the current working state of the touch panel integrated circuit is the power-off state. In this case, the touch panel integrated circuit is powered off, and the touch driver of the mobile phone directly switches the working state of the touch panel integrated circuit to the power-off state.

S1005: The touch panel integrated circuit of the mobile phone sends second notification information to a system process of the mobile phone.

In addition to controlling the touch panel integrated circuit to recover the working state, the touch driver of the mobile phone may further send second notification information to a system process at an upper layer of the mobile phone. The second notification information is used to notify the system process to instruct to enable an interrupt response. For example, the touch driver of the mobile phone may send the second notification information to a daemon process of the mobile phone.

The system process of the mobile phone may exit a suspended state after obtaining the second notification information. Further, the system process of the mobile phone may instruct the touch driver to enable the interrupt response. Alternatively, the system process may instruct the touch driver to update a driver.

In this embodiment of this application, after the touch panel integrated circuit of the mobile phone receives the exception recovery instruction, the touch panel integrated circuit may be controlled to recover to the previous working state of the interrupt protection state, or the current working state. For ease of description, the recovered working state of the touch panel integrated circuit is referred to herein as a target state. The target state may be a screen-on state, a gesture screen-off state, or a power-off state.

Herein, if the target state is the power-off state, the touch driver of the mobile phone may execute the operation procedure shown in FIG. 8. Details are not described herein again.

That the target state is the screen-on state or the gesture screen-off state is used as an example to describe a process in which the touch driver of the mobile phone controls, in response to an exception recovery instruction, the touch panel integrated circuit to switch to the target state.

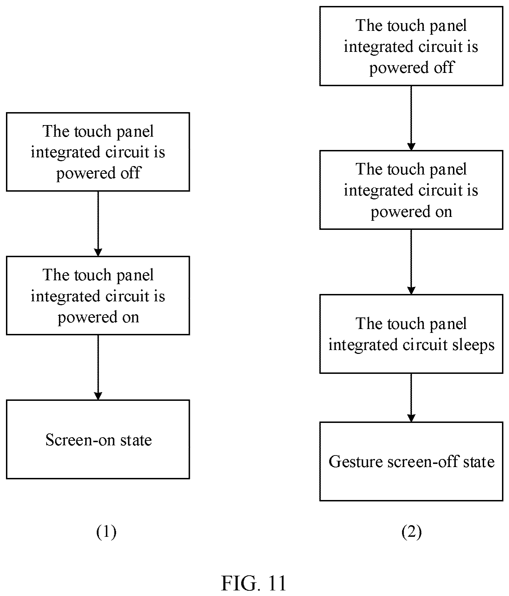

That the target state is the screen-on state is used as an example. As shown in (1) of FIG. 11, the touch driver of the mobile phone may first control the touch panel integrated circuit to be powered off, and execute a power-off procedure of the touch panel integrated circuit (for example, execute the operation procedure shown in FIG. 8). The touch driver then controls the touch panel integrated circuit to be powered on, and switches the working state of the touch panel integrated circuit to the screen-on state. In this example, if the target state is the screen-on state, the touch driver of the mobile phone may restart the touch panel integrated circuit to switch the screen-on state.

Then, that the target state is the gesture power-off state is used as an example. As shown in (2) of FIG. 11, the touch driver of the mobile phone may first control the touch panel integrated circuit to be powered off, and execute a power-off procedure of the touch panel integrated circuit (for example, execute the operation procedure shown in FIG. 8). The touch driver then controls the touch panel integrated circuit to be powered on to restart the touch panel integrated circuit. Further, the touch driver of the mobile phone controls the touch panel integrated circuit to sleep, so as to switch the gesture screen-off state.

In this example, if the target state is the screen-on state, the touch driver controls the touch panel integrated circuit to restart, and may control, based on the power-off procedure of the touch panel integrated circuit, the touch panel integrated circuit to be powered on again by using the screen-on procedure. If the target state is the gesture screen-off state, the touch driver controls the touch panel integrated circuit to sleep, and may control, based on the power-off procedure and the power-on procedure of the touch panel integrated circuit, the touch panel integrated circuit to switch to the gesture screen-off state by using a sleep procedure.

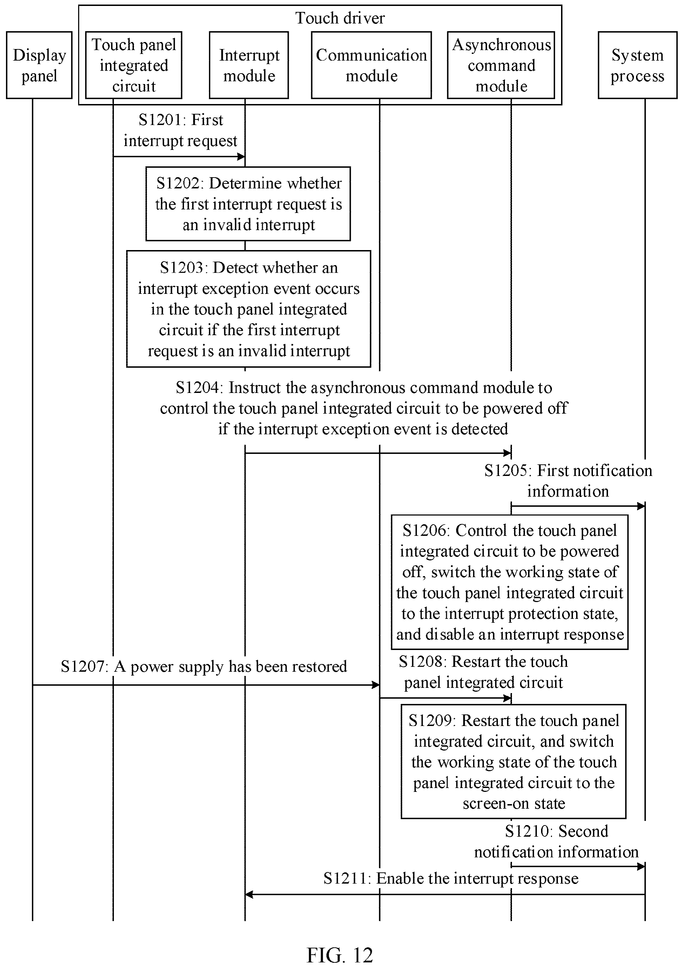

According to the method provided in this embodiment of this application, for an exception that occurs in the touch panel integrated circuit, the exception is protected by detecting an interrupt exception event, and different recovery schemes are used for different target states. That an exception occurs in the screen-on state of the touch panel integrated circuit is used as an example to describe the method provided in this embodiment of this application. As shown in FIG. 12, the touch driver of the mobile phone includes an interrupt module, a communication module, and an asynchronous command module.

S1201: The interrupt module receives a first interrupt request from the touch panel integrated circuit.

The interrupt module of the touch driver may invoke an interrupt thread to receive the first interrupt request from the touch panel integrated circuit. When the interrupt thread receives the first interrupt request from the touch panel integrated circuit, reference may be made to the foregoing description of S601. Details are not described herein again.

S1202: The interrupt module determines, in response to the first interrupt request, whether the first interrupt request is an invalid interrupt.

The interrupt thread of the interrupt module determines whether the first interrupt request is an invalid interrupt. When the interrupt thread determines whether the first interrupt request is an invalid interrupt, reference may be made to the foregoing description of S703. Details are not described herein again.

S1203: The interrupt module detects whether an interrupt exception event occurs in the touch panel integrated circuit if the first interrupt request is an invalid interrupt.

If the first interrupt request is an invalid interrupt, the interrupt thread of the interrupt module detects whether the interrupt exception event occurs in the touch panel integrated circuit. For detection of the interrupt exception event by the interrupt thread, reference may be made to the foregoing description of FIG. 9. Details are not described herein again.

S1204: The interrupt module instructs the asynchronous command module to control the touch panel integrated circuit to be powered off if the interrupt exception event is detected.

The interrupt module may instruct, by using the interrupt thread, the asynchronous command module to control the touch panel integrated circuit to be powered off.

S1205: The asynchronous command module sends first notification information to a system process at an upper layer.

When the asynchronous command module sends the first notification information to the system process at the upper layer, reference may be made to the foregoing description of S603 and S604. Details are not described herein again.

S1206: The asynchronous command module controls the touch panel integrated circuit to be powered off, switches the working state of the touch panel integrated circuit to the interrupt protection state, and disables an interrupt response.

For this step, reference may be made to the operation procedure shown in FIG. 8. Details are not described herein again.

S1207: The display panel notifies the touch driver, through an exception recovery instruction, that a power supply has been restored.

With the power supply restored, the display panel of the mobile phone may instruct, through the exception recovery instruction, that the power supply of the touch panel integrated circuit has been restored.

S1208: The communication module of the touch driver instructs the asynchronous command module to restart the touch panel integrated circuit.

When it is determined that the touch panel integrated circuit is in the interrupt protection state, the communication module may instruct the asynchronous command module to restart the touch panel integrated circuit, so that the touch panel integrated circuit is recovered to a previous working state of the interrupt protection state, even if the touch panel integrated circuit is recovered to the screen-on state.

S1209: The asynchronous command module restarts the touch panel integrated circuit, and switches the working state of the touch panel integrated circuit to the screen-on state.

For this step, reference may be made to the foregoing procedure shown in (1) of FIG. 11. Details are not described herein again.

S1210: The asynchronous command module sends second notification information to the system process at the upper layer.

For this step, reference may be made to the foregoing description of S1005. Details are not described herein again.

S1211: The system process instructs the interrupt module to enable the interrupt response.

After obtaining the second notification information, the system process may instruct the interrupt module to enable the interrupt response. The interrupt module enables the interrupt response, and a response to an interrupt message from the touch panel integrated circuit may be recovered. The touch panel integrated circuit recovers the touch function in the screen-on state, and responds to a touch operation of the user. For example, the touch driver of the application processor may set the interrupt permission flag bit to 1. When the interrupt permission flag bit is 1, the application processor no longer responds to the interrupt request from the touch panel integrated circuit.

Some other embodiments of this application further provide an electronic device, including a touch panel integrated circuit, a memory, and at least one processor. The memory is coupled to the processor. The touch panel integrated circuit is configured to receive a touch signal. The memory stores computer program code, and the computer program code includes computer instructions. When the computer instructions are executed by the processor, the electronic device may perform the functions or steps in the foregoing method embodiments. Certainly, the electronic device may further include another hardware structure, such as another antenna configured to receive a signal. For example, the electronic device further includes a hardware structure such as a sensor and a display. For a structure of the electronic device, reference may be made to the structure of the mobile phone 100 shown in FIG. 4.

An embodiment of this application further provides a chip system, where the chip system is applied to an electronic device. The chip system includes at least one processor and at least one interface circuit. The processor and the interface circuit may be interconnected by using a line. For example, the interface circuit may be configured to receive a signal from another apparatus (for example, a memory). For another example, the interface circuit may be configured to send a signal to another apparatus (for example, the processor). For example, the interface circuit may read instructions stored in the memory and send the instructions to the processor. When the instructions are executed by the processor, the electronic device may be enabled to perform the steps in the foregoing embodiments. Certainly, the chip system may further include other discrete components. This is not specifically limited in this embodiment of this application.

An embodiment of this application further provides a computer-readable storage medium. The computer storage medium includes computer instructions. When the computer instructions are run on the foregoing electronic device, the electronic device is enabled to perform the functions or steps in the foregoing method embodiments.

An embodiment of this application further provides a computer program product. When the computer program product runs on a computer, the computer is enabled to perform the functions or steps in the foregoing method embodiments. For example, the computer may be the electronic device.

It can be clearly learned by a person skilled in the art from the foregoing descriptions of the implementations that for convenience and brevity of description, only division into the foregoing functional modules is used as an example for description. In an actual application, the foregoing functions may be allocated to different functional modules for implementation based on a requirement, in other words, an internal structure of an apparatus is divided into different functional modules, to implement all or some of the functions described above.

In the several embodiments provided in this application, it should be understood that the disclosed apparatus and method may be implemented in another manner. For example, the apparatus embodiments described above are merely examples. For example, division into modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, in other words, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method in the embodiments of this application. The foregoing storage medium includes various media that can store program code, for example, a USB flash drive, a removable hard disk, a read-only memory (read only memory, ROM), a random access memory (random access memory, RAM), a magnetic disk, or an optical disc.

The foregoing content is only specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. An exception event handling method, applied to an electronic device, wherein the electronic device comprises a touch panel integrated circuit, and the method comprises:
detecting a first interrupt request from the touch panel integrated circuit;
determining, in response to the first interrupt request, whether an interrupt exception event occurs in the touch panel integrated circuit, wherein the interrupt exception event indicates that an exception occurs on an interrupt request from the touch panel integrated circuit; and
if the interrupt exception event occurs in the touch panel integrated circuit, sending first notification information to a system process of the electronic device, and shielding the interrupt request from the touch panel integrated circuit, wherein the first notification information is used to notify the system process not to instruct to enable an interrupt response, and the interrupt response is used to respond to the interrupt request from the touch panel integrated circuit.

2. The method according to claim 1, wherein the determining whether an interrupt exception event occurs in the touch panel integrated circuit comprises:
determining whether an interrupt exception event occurs in the touch panel integrated circuit when a working state of the touch panel integrated circuit is a screen-on state or a gesture screen-off state, wherein the gesture screen-off state is a state in which the electronic device is in a screen-off state but responds to a touch gesture operation.

3. The method according to claim 2, wherein the determining whether an interrupt exception event occurs in the touch panel integrated circuit when a working state of the touch panel integrated circuit is a screen-on state or a gesture screen-off state comprises:
determining whether the interrupt exception event occurs in the touch panel integrated circuit when the first interrupt request is an invalid interrupt if the working state of the touch panel integrated circuit is the screen-on state.

4. The method according to any one of claims 1-3, wherein the method further comprises:
disabling the touch panel integrated circuit if the interrupt exception event occurs in the touch panel integrated circuit.

5. The method according to any one of claims 1-4, wherein the working state of the touch panel integrated circuit is any one of a screen-on state, a gesture screen-off state, a power-off state, and an interrupt protection state, wherein
the power-off state is a state in which the electronic device is in a screen-off state and does not respond to a touch gesture operation.

6. The method according to claim 5, wherein the working state of the touch panel integrated circuit is the interrupt protection state if the interrupt exception event occurs in the touch panel integrated circuit.

7. The method according to claim 6, wherein the method further comprises:
receiving an exception recovery instruction, wherein the exception recovery instruction is used to instruct the touch panel integrated circuit to recover from the interrupt exception event;
obtaining, in response to the exception recovery instruction, a current working state of the touch panel integrated circuit; and
controlling the touch panel integrated circuit to recover to a previous working state of the interrupt protection state if the current working state of the touch panel integrated circuit is the interrupt protection state.

8. The method according to claim 7, wherein the method further comprises:
recovering the touch panel integrated circuit to the current working state of the touch panel integrated circuit after the touch panel integrated circuit is powered off if the current working state of the touch panel integrated circuit is not the interrupt protection state.

9. The method according to claim 7 or 8, wherein the method further comprises:
sending second notification information to the system process, wherein the second notification information is used to notify the system process to instruct to enable an interrupt response.

10. An electronic device, comprising a touch panel integrated circuit, a memory, and at least one processor, wherein the touch panel integrated circuit and the memory are coupled to the processor, the touch panel integrated circuit is configured to receive a touch signal, the memory stores computer program code, the computer program code comprises computer instructions, and when the computer instructions are executed by the processor, the electronic device is enabled to perform the method according to any one of claims 1-9.

11. A computer-readable storage medium, comprising computer instructions, wherein when the computer instructions are run on an electronic device, the electronic device is enabled to perform the method according to any one of claims 1-9.
